# EUROPEAN PATENT SPECIFICATION

(11) **EP 2 372 336 B1**
(45) Date of publication and mention of the grant of the patent: **08.05.2013**
(21) Application number: 11159296.0
(22) Date of filing: 22.03.2011
(51) Int. Cl.: G01M 99/00

(54) **Device and method for determining a vehicle component failure state based on the analysis of the thermographic map of the component itself.**
System und Verfahren zur Feststellung eines Fehlerzustandes von einem Fahrzeugbauteil mittels der Analyse eines thermografischen Bildes des Bauteils.
Système et procédé de détection d'une condition de défaut d'un composant de véhicule basé sur l'analyse de l'image thermographique du composant.

(30) Priority: 22.03.2010 IT TV20100038
(43) Date of publication of application: 05.10.2011
(73) Proprietor: Texa S.p.A., Monastier di Treviso (IT)
(72) Inventor: VIANELLO, Bruno, 31056, RONCADE (IT)
(74) Representative: Jorio, Paolo

(56) References cited:
- EP-A2- 0 084 374
- EP-A2- 0 349 135
- WO-A1-2004/030172

## Description

The present invention relates to a device and to a method for determining a vehicle component failure state based on a thermograph of the component itself.

In particular, the present invention finds advantageous application in the automotive field and has the purpose of assisting an operator in determining malfunctioning of components/devices of a mechanical and/or electrical and/or electronic type comprised in a vehicle, such as, for example, a motorcycle, and/or a motor vehicle and/or any other type of similar land vehicle, to which the ensuing treatment will make explicit reference without this implying any loss of generality.

Known to the state of the art are portable thermographic cameras, i.e., thermographic video cameras configured in such a way as to measure the radiation emitted by a body in the infrared range so as to display to a user, through a screen, the thermographic map containing the temperature curves measured on the body itself.

It is moreover known that in the last few years, in various technical fields, thermographic-diagnosis techniques have been introduced in which the operator determines malfunctioning of an electronic and/or mechanical component based on the distribution of the temperature curves of the thermographic map of the component itself generated by the thermographic camera.

Currently known techniques for thermographic diagnosis of components using a thermographic camera are advantageous in so far as they make it possible to carry out a non-intrusive diagnosis on the component, but present an intrinsic complexity of use.

In particular, the aforesaid thermographic-diagnosis techniques require the knowledge of specific techniques by the operator of the thermographic camera both as regards the modalities of setting/calibration of the thermographic camera to implement in the course of acquisition of the thermographic map and as regards analysis and interpretation of the information contained in the thermographic map for the purpose of diagnosing malfunctioning of the component.

In other words, in order to be able to implement the aforesaid thermographic-diagnosis techniques, the operator of the thermographic camera must have a sufficient technical know-how in order both to be able to calibrate the thermographic camera, i.e., set adequately and correctly the calibration parameters thereof as a function of the components being diagnosed and of the conditions of disturbance in the measurement environment, and to prevent undesirable effects of reflection due to the presence of heat sources/sinks in the proximity of the component being diagnosed, as well as to interpret the thermal information contained in the thermographic map itself in such a way as to diagnose failure of the component.

The document No. EP0349135A2 describes an apparatus for determining, through a thermographic analysis, the location and type of defect associated to areas of contact of an engine, wherein it is envisaged to arrange the apparatus within a black box in order to reduce the disturbance associated to background lighting.

The document No. EP0084374A2 regards a method for acquisition, processing, and display of digital images through a thermographic process.

The document No. W02004030172 A1 describes an apparatus for monitoring a technical installation so as to perform diagnoses, wherein it is envisaged to: derive a pattern of temperatures regarding an operative situation of a technical installation; compare the pattern of temperatures with a reference pattern of temperatures of malfunctioning; and classify the operative situation of the technical installation on the basis of the comparison.

The aim of the present invention is consequently to provide a device that, on the one hand, will be able to assist the operator in the operations of adjustment of the calibration parameters of the thermographic camera, in particular of the parameters such as emissivity and reflected temperature, and, on the other hand, will determine a condition of malfunctioning, i.e., a failure state, associated to a malfunctioning of the component based on the analysis of the thermographic map of the component itself.

According to the present invention, a device configured to determine the component failure state a on the basis of a thermographic map of the component itself is provided as specified in Claim 1 and preferably, but not necessarily, in any one of the claims that depend either directly or indirectly upon Claim 1.

According to the present invention, a method for determining the component failure state a on the basis of a thermographic map of the component itself is moreover provided as specified in Claim 7 and preferably, but not necessarily, in any one of the claims that depend either directly or indirectly upon Claim 7.

According to the present invention, a software program is moreover provided according to Claim 14.

According to the present invention, a thermographic video camera is moreover provided according to Claim 15.

The present invention will now be described with reference to the annexed drawings, which illustrate a non-limiting example of embodiment thereof and in which:
- Figure 1 is a schematic illustration of a device configured to determine the failure state of a vehicle component on the basis of the thermographic map of the component itself, provided according to the teachings of the present invention;
- Figure 2 is a flowchart of the operations implemented by the device shown in Figure 1; whilst
- Figure 3 is a possible example of a graphic representation of a vehicle system displayed to a user by the device shown in Figure 1, visible in which are a window for locating the component and windows for locating the disturbance heat sources.

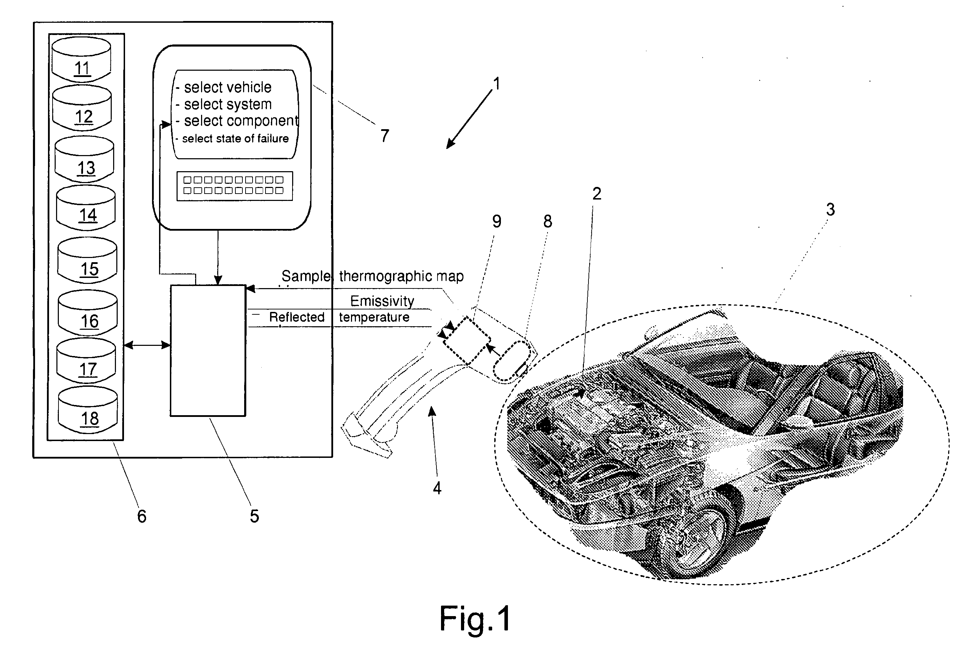

With reference to Figure 1, designated as a whole by number 1 is a device configured to determine a failure state of a component 2 of a vehicle 3 based on a thermographic map of the component 2 itself.

The device 1 basically comprises a thermographic camera 4, configured to acquire the thermographic map of the component 2; a processing unit 5 able to process the thermographic map acquired; a memory 6 comprising a set of databases, described in detail hereinafter, each of which contains data/information that can be used by the processing unit 5 to determine the failure state of a component 2, and a user interface 7 configured to enable the user to enter a set of information regarding the component 2 that is to be diagnosed.

In the example illustrated in Figure 1, the thermographic camera 4 comprises an infrared video camera, preferably of a portable type, configured to determine a two-dimensional map of the temperatures of the component 2 through the measurement of the intensity of infrared radiation emitted by the component 2 itself. The thermographic camera 4 is provided with sensor means 8, which are sensitive to radiation in the infrared range emitted by the component 2, and are configured to supply at output the thermographic map of the component itself; and a control module 9, which receives at input the thermographic map generated by the sensor means 8 and is configured to process said map as a function of the calibration parameters.

In the example illustrated, the control module 9 is configured to process the thermographic map supplied by the sensor means 8 on the basis of a first calibration parameter associated to the emissivity and of a second calibration parameter associated to the reflected temperature.

Regarding the memory 6, it is configured to store: a vehicle database 11, containing an archive of vehicle models; a system database 12, containing for each vehicle model an archive of the corresponding vehicle systems; and a component database 13, containing for each system of a vehicle model an archive of the corresponding electrical/electronic/mechanical components.

In the present description, it should be pointed out that with the term "system" reference will be made to any mechanical/electronic/electrical assembly and/or apparatus and/or device present in a vehicle.

According to a preferred embodiment, the component database 13 contains, for each component 2 of the system, one or more failure states, each of which is associated to a specific type of malfunctioning of the component 2 itself.

The memory 6 further comprises a database for emissivity parameters and thresholds 14, which comprises an emissivity value for each failure state of a component 2.

In the above description, it should be pointed out that the emissivity value associated to the failure state of each component 2 can be determined beforehand on the basis of the emissivity measured on the portion of the component affected by the malfunctioning corresponding to the failure state.

Preferably, the emissivity value can be measured beforehand in a condition of possible onset of failure and varies on the basis of the temperature of the portion that has undergone failure, the emissivity of the material of which the portion of the component in the failure state is made, and/or the surface treatment of the material, and/or the geometry of the portion itself. In other words, the emissivity database is hence not limited to a simple table of values of emissivity of the material, but expresses the relation between the failure state of each component, characterized by materials, surface treatments, and temperatures, and the thermographic properties thereof.

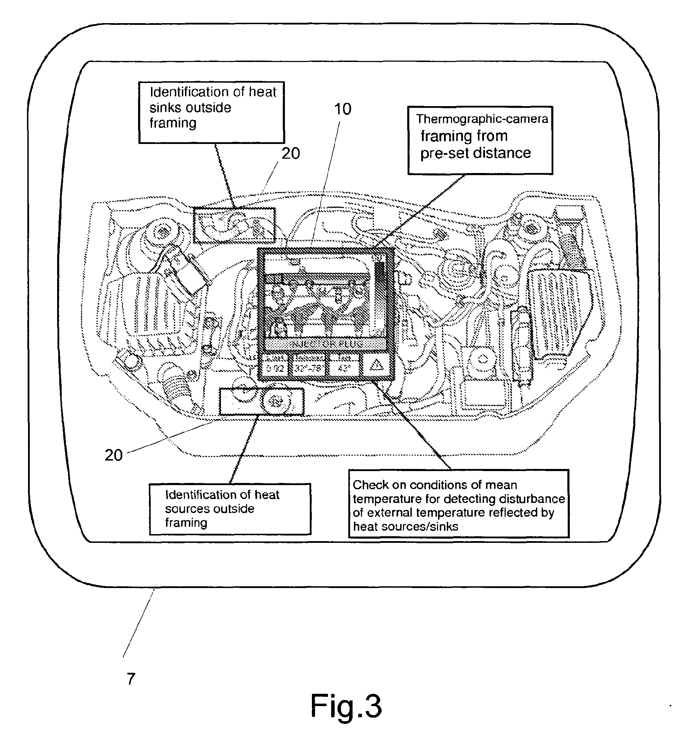

In the example illustrated, the memory 6 further comprises a database 15, containing, for each failure state of a component 2, a graphic representation of the system, visible/highlighted in which are: a window 10 for locating the component 2, delimiting inside it, for example, a reference thermographic map of the component 2 (shown in Figure 3), and one or more windows 20, each of which surrounds a respective heat source/sink extraneous to the measurement so as to enable the user to visualize in an immediate way the position of potential disturbance heat sources present in the area of the component 2 (shown in Figure 3) and ensure a correct framing of the component 2.

The database 15 can moreover comprise, for each failure state of a component 2, a set of information of correct positioning of the thermographic camera 4 in space to implement an acquisition of the thermographic map of the component 2 in a condition of minimum disturbance by heat sources corresponding to other components present in the system. In the case in point, the indications of correct positioning of the thermographic camera 4 can comprise, for example: the orientation in space of the thermographic camera 4, and a maximum and/or minimum positioning distance of the thermographic camera 4 with respect to the component 2 to be examined.

The memory 6 further comprises a database 16, comprising, for each failure state of a component 2, ends of ambient temperature TAM-MIN, TAM-MAX within which the ambient temperature value of acquisition by the thermographic camera TAM must be contained to ensure a correct measurement, i.e., a measurement performed in the absence of potential disturbance heat sources.

The memory 6 further comprises a temperature database 17, which comprises, for each failure state of a component 2 a thermal scale ΔTC for setting of the thermographic map. The thermal scale ΔTC is delimited by an acquisition temperature corresponding to a minimum temperature TMIN and an acquisition temperature corresponding to a maximum temperature TMAX, which are pre-set specifically to facilitate interpretation of the thermographic map of the component 2 undergoing measurement, and correspond, respectively, to the minimum/maximum temperature that can be found in the framing of the component in question, in the absence of heat disturbance, in observance of the procedure of measurement specific for the state of failure of the component 2.

The database 17 moreover contains, for each failure state of a component 2, a critical temperature threshold TSC associated to a condition of onset of the failure state in the component 2.

The memory 6 further comprises an onset-of-failure database 18 comprising, for each failure state of a component 2, a pre-set reference thermographic map acquired in conditions of proper operation of the component 2 itself.

As regards the processing unit 5 and the user interface 7, they are of a known type and will not be further described other than to point out that the processing unit 5 can comprise a microprocessor or any electronic computer that is able to implement operations envisaged in a program/algorithm, whilst the user interface 7 can comprise a screen for displaying data/information, and a control device, for example a keyboard or a mouse or any other type of similar device designed to enable the operator to impart commands on the processing unit.

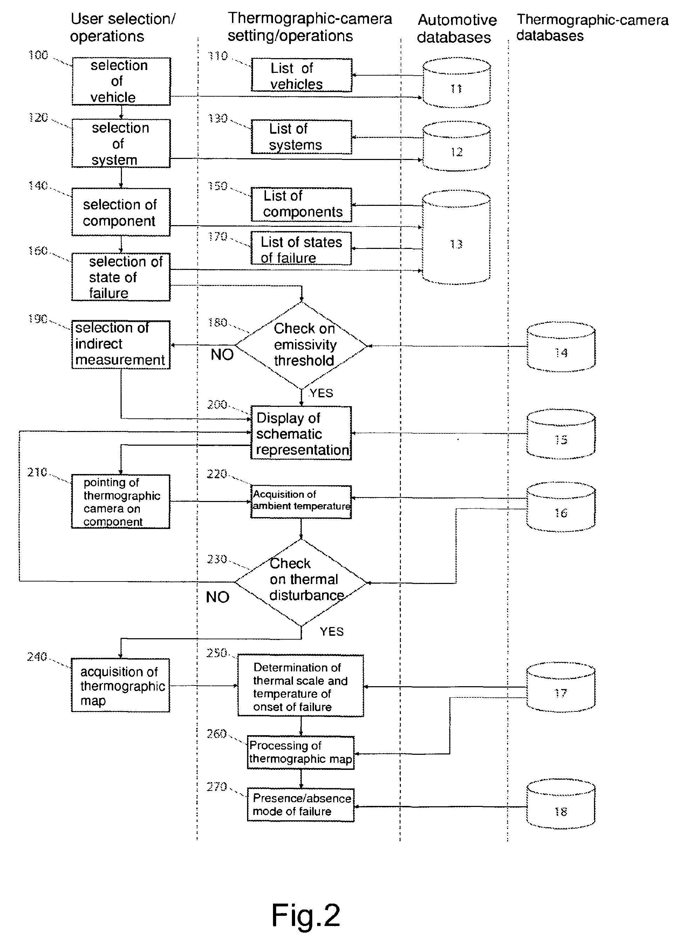

With reference to Figures 2 and 3, described hereinafter is the method implemented by the device 1 to determine a failure state of a component 2 on the basis of a thermographic map acquired by the thermographic camera 4.

For simplicity of description and in order to facilitate the understanding of the present method, but without this implying any loss of generality and moreover purely by way of example, reference will be made hereinafter to the determination of a failure of a vehicle system corresponding to the common-rail engine supply system arranged in the engine compartment of the vehicle 3 (shown in Figures 1 and 3), in which the component 2 to be examined is an injector.

It is moreover assumed that, in the component database 13, the component 2 "injector" is associated to three possible states of failure; namely, "state of loosening of the injector plug", "state of blocking of the injector in the open position", and "state of blocking of the injector in the closed position".

The method envisages that the operator will select, through the user interface 7, the following data: vehicle model (block 100); system to be monitored (block 120); component 2, corresponding, in this case, to the injector on which the check is required (block 140).

In particular, following upon selection of the vehicle model, the processing unit 5 lists for the operator, through the user interface 7, the systems contained in the system database and associated to the vehicle selected on which systems it is possible to carry out a thermographic diagnosis (block 130).

Following upon selection of the system, corresponding in this case, to the common-rail supply system, the processing unit 5 lists for the operator, through the user interface 7, the components of the system contained in the component database 13 that are associated to the system selected and on which it is possible to carry out a thermographic diagnosis (block 150).

Following upon selection of the component, corresponding, in this case, to the injector, the processing unit 5 lists for the operator the failure states of the injector contained in the component database 13 (block 170).

The processing unit 5 identifies in the component database 13, on the basis of the component "injector" selected, the following information/data: the pre-set reference thermographic map of the injector; the pre-set graphic representation of the system with the window 10; and the information of correct positioning of the thermographic camera 4.

It is assumed that the operator selects, through the user interface 7, the state of failure corresponding to the "state of loosening of the injector plug" (block 160).

The processing unit 5 determines, through the database for the emissivity parameters and thresholds 14, the emissivity value specific for the failure state of the component selected and checks whether said value is higher or lower than a pre-set emissivity threshold εT specific for the thermal measurement of the failure state on the component 2 (block 180).

The pre-set specific emissivity threshold εT is calculated as threshold above which the effects of reflection are deemed negligible for measurement of the failure and of the component in question. The emissivity threshold can be, for example, defined as a pre-set engineering parameter, for instance, ε T = 0.90, or else can be determined as a function of the specific failure state on the basis of the position of the component with respect to disturbance heat sources. For example, the emissivity threshold could have a pre-set value of εT = 0.92 in the case of onset of failure in the actuator of the variable-geometry turbine set in a position corresponding to the turbine, which constitutes a non-negligible element of heat disturbance in the measurement.

If the emissivity value is higher than the pre-set specific emissivity threshold εT (output YES from block 180), the processing unit 5 assigns to the calibration parameter of the reflected temperature of the thermographic camera 4 the value of the ambient temperature TA, which is detected by the device 2.

In order to guide the user conveniently in proper framing of the component, the processing unit 5 determines, through the component database 13 and the database 15 on the basis of the component and of the failure state selected by the user, the schematic graphic representation of the system, visible in which are both the window for locating the component 10 and the window 20 for displaying the disturbance heat sources present in the area of the component 10.

In this step, with reference to the example shown in Figure 3, the device 1 displays conveniently the schematic representation to the operator so as to enable him to identify the component 2, in this case the injector in the engine compartment, and potential heat sources and/or sinks, such as, for example, the turbine or the evaporator, which are liable to disturb acquisition of the thermographic map (block 200).

At this point, the processing unit 5 communicates to the operator, through the user interface 7, to set the thermographic camera 4 in the position of correct orientation in the direction of the injector component 2 and issues a command to the control module 9 for carrying out, instant by instant, an acquisition of a test thermographic map of the component selected (block 210), with unit emissivity parameter.

The ambient temperature TA is measured directly by the thermographic camera 4, automatically setting the emissivity parameter at a unit value and calculating the mean value of the temperature present in the framing that has been set (block 220).

In particular, in this step, the processing unit 5 processes the temperature curve of the test thermographic map according to the unit emissivity value (and hence of negligible reflected temperature), thus determining a value that is indicative of the mean ambient temperature TAM determined by computing the arithmetic average of the temperatures TA acquired in the test thermographic map (block 220).

The processing unit 5 then receives the test thermographic map from the control module 9 and processes it so as to verify whether the temperature curves are thermally affected by the heat sources present in the area of the component 2 examined (block 230).

In particular, the processing unit 5 checks whether the mean ambient temperature TAM is comprised or not within a correct-acquisition range ΔTAM delimited by a pre-set minimum temperature TAM-MIN and a pre-set maximum temperature TAM-MAX. The correct-acquisition range ΔTAM is determined through the database 16.

If the mean ambient temperature TAM falls outside the correct-acquisition range ΔTAM (output NO from block 230), then the processing unit 5 detects a condition of incorrect thermographic acquisition and communicates to the user a set of information designed to enable the operator himself to modify pointing of the thermographic camera towards the component so as to obtain a correct thermographic acquisition (block 200).

If, instead, the mean ambient temperature TAM falls within the correct-acquisition range ΔTAM (output YES from block 230), then the processing unit 5 detects a condition of correct pointing/acquisition and issues a command to the thermographic camera 4 for acquisition of the sample thermographic map of the component 2 (block 240), assigning to the reflected-temperature parameter the value of the mean temperature TAM measured (block 220).

If the emissivity value is lower than the pre-set specific emissivity threshold εT (output NO from block 180), the processing unit 5 highlights the condition of possible reflection to the user and requests execution of an indirect thermographic measurement of the component 2. In particular, the indirect measurement can be carried out by applying an adhesive tape of a specific material with definite emissivity (e.g., ε = 0.95) on the part of the component 2 subject to failure (block 190). In this case, the hypothesis of low reflection is automatically satisfied so that the value of the mean ambient temperature TAM measured is assigned to the reflected-temperature parameter.

It may be noted in this connection that the method proposed for the cases of low emissivity, and hence of non-negligible reflection, is recalled in a limited number of cases in the vehicle-repair sector, precisely for adoption of materials and techniques of surface treatment oriented towards optimization of heat exchange in the design of internal-combustion engines and of vehicles in general.

The processing unit 5 supplies the value of emissivity and of mean ambient temperature TAM to the control module 9, which in turn regulates the functions of acquisition of the thermographic camera 4 on the basis of the value of emissivity and reflected temperature set (block 240).

At the term of automatic adjustment of the calibration parameters, the processing unit 5 determines, on the basis of the failure state of the component 2, the correct-acquisition thermal scale ΔTC (block 250) in such a way as to assign to the temperatures comprised in the correct-acquisition thermal scale ΔTC respective colours so as to enable the user to distinguish conveniently the thermal curves that characterize the thermographic map specific for the measurement in progress.

In particular, the processing unit 5 can be configured in such a way as to assign the colours of a pre-set chromatic scale to respective temperatures of the map according to a pre-set order of assignment. For example, a first colour of the scale, which may correspond to black, is associated to the minimum temperature TMIN, and the last colour of the scale, which may correspond to white, is associated to the maximum temperature TMAX, whilst the intermediate colours can be assigned to as many temperatures, or temperature ranges, comprised between TMIN-TMAX, so as to represent thermal gradients with variation of chromatic scales. The information of configuration of the thermal scale is included in the database 17 and is specific for the state of failure of the component 2 (block 250).

At this point, the processing unit 5 determines, through the database 17, on the basis of the failure state of the component 2, the critical temperature threshold TSC of onset of failure and processes the sample thermographic map acquired, using a diagnosis algorithm (block 260), so as to determine in a completely automatic way the presence/absence of the state of failure selected.

In greater detail, the diagnosis algorithm can determine the presence/absence of the state of failure selected by carrying out a comparison between the temperature curves present in the sample thermographic map acquired and corresponding temperature curves present in the pre-set reference thermographic map contained in the database 18.

The processing unit 5 can be configured to compare the temperature curves present in the sample thermographic map corresponding to the outer surface of the injector with respective temperature curves present in the reference thermographic map so as to determine the deviation between them, and determine, as a function of the degree of deviation, the presence/absence of the failure state, corresponding, in the example illustrated in Figure 3, to the state of loosening of the injector plug (block 270).

In greater detail, according to a first embodiment, the diagnosis algorithm can be configured to confirm the presence of the state of failure when one or more measured temperatures within a set of critical areas and/or curves of measurement located in/intersecting pre-set points in the sample thermographic map, satisfies/satisfy a given relation with the critical temperature TSC. For example, the relation can be satisfied when with one or more measured temperatures within the critical areas and/or curves of the sample thermographic map is/are higher than the critical temperature TSC.

Otherwise, the algorithm can determine the absence of the state of failure when the measured temperatures within the critical areas and/or curves of the sample thermographic map are lower than the critical temperature TSC.

In the case in point the algorithm of diagnosis can detect the presence of the failure state when a pre-set number of measured temperatures within the critical areas and/or curves of the sample thermographic map has a value greater than the critical temperature TSC.

Otherwise, the algorithm can determine the absence of the failure state when a pre-set number of measured temperatures within the critical areas and/or curves of the sample thermographic map has a value lower than the critical temperature TSC.

From what has been described above, it emerges that the method for determining malfunctioning of at least one vehicle component provided according to the present invention can correspond to a method that can be implemented on a computer, and in particular to a software program that can be loaded in the memory 6 of the processing unit 5 and is configured in such a way that, when it is run on the processing unit (5), the processing unit (5) itself operates in such a way as to execute the operations envisaged by the method itself.

In particular, the software program can be configured in such a way as to implement the operative steps described in blocks 100 to 270 described in detail above and shown in Figure 2.

The device and the method described above present the advantages listed in what follows.

In the first place, the practically automatic calibration of the parameters of emissivity and reflected temperature carried out by the system considerably simplifies the settings performed by the operator, limiting them to a simple and intuitive selection of the model of the vehicle, of the system of the component, and of the presumed state of failure.

Furthermore, the device in addition to advantageously warning the operator of conditions of incorrect acquisition of the map, interprets the thermographic map in order to determine the state of malfunctioning of the component.

## Claims

1. A device configured to determine malfunctioning of at least one vehicle component (1) in a vehicle system, said device comprising:
- storage means (6) comprising:
o a plurality of component data associated to corresponding vehicle components (2);
o for each component datum, one or more failure states of the vehicle component (2);
o for each failure state of said component (2), a reference thermographic map associated to a condition of proper operation of the vehicle component (2), and a pre-set emissivity value indicating the emissivity of the component (2) in the failure state;
- interface means (7) configured to enable a user to select a vehicle component (2) to be diagnosed, and a possible failure state of the vehicle component (2) itself;
- thermographic means (4) configured to:
o measure the intensity of the infrared radiation emitted by the component (2); and
o determining a sample thermographic map of the component (2) based on the intensity of the infrared radiation measured, and as a function of a first calibration parameter indicating the emissivity and of a second calibration parameter indicating the reflected temperature; and
- processing means (5) configured to:
o compare the sample thermographic map determined by the thermographic means (4) with the reference thermographic map associated to said component (2); and
o diagnose the presence or the absence of the failure state of said component (2) selected by the user as a function of the comparison between the thermographic maps;
said device being **characterized in that** said processing means (5) are moreover configured to carry out, prior to determination of said sample thermographic map, the following operations:
- determining the emissivity value contained in the storage means (6) associated to the failure state of the component (2) selected by the user; and
- automatically assigning said emissivity value to said first calibration parameter of said thermographic means (4).

2. The device according to Claim 1, wherein said processing means (5) are moreover configured to carry out, prior to determination of said sample thermographic map, the following operations:
- determining a test thermographic map of the component (2) on the basis of the intensity of the infrared radiation measured on the component (2);
- determining a temperature value (TAM) on the basis of the acquired temperatures (TA) present in said test thermographic map determined;
- comparing the emissivity value associated to the component (2) and to the failure state selected by the user, with a pre-set emissivity threshold (εT); and
- automatically assigning said temperature value (TAM) to said second calibration parameter of said thermographic means (4) if the emissivity value of the component (2) in the failure state selected by the user is higher than said pre-set emissivity threshold (εT).

3. The device according to Claim 2, wherein:
- said storage means (6) comprise a correct-acquisition temperature range (ΔTAM) for each failure state of a component (2) ;
said processing means (5) being moreover configured to implement, prior to determination of the sample thermographic map of the component (2), the following operations:
- automatically assigning a unit value to the calibration parameter of emissivity of said thermographic means (4);
- determining said test thermographic map of the component (2) ;
- determining said temperature value (TAM) as a function of the acquired temperatures (TA) contained in said test thermographic map; and
- warning the operator of a condition of incorrect positioning of said thermographic means (4) with respect to said component (2) when said temperature value (TAM) is not comprised in the correct-acquisition range (ΔTAM) associated to the failure state of said component (2).

4. The device according to any one of the preceding claims, wherein:
- said storage means (6) comprise, for each failure state of a component (2), a graphic representation of at least one portion of the system containing said component (2); said graphic representation containing a window for locating the component and one or more windows for locating disturbance heat sources set around said component (2);
said processing means (5) being moreover configured to:
- determine in said storage means (6) the graphic representation of the system containing the window for locating the component and one or more windows for locating disturbance heat sources set around said component (2), as a function of the component (2) and of the failure state selected by the user;
- display, through said interface means (7), said graphic representation of the system, visible/highlighted in which are said window for locating the component and/or said windows for locating disturbance heat sources.

5. The device according to any one of the preceding claims, wherein:
- said storage means (6) comprise, for each failure state of a component (2), a set of position information indicating the correct positioning in which to keep the thermographic means (4) in space so as to carry out an acquisition of the thermographic map of the component (2) in a condition of minimum disturbance by disturbance heat sources present in the area of said component (2);
said processing means (5) being moreover configured to:
- determine in said storage means (6) the position information as a function of the component (2) and of the state of failure selected by the user; and
- displaying, through said interface means (7), said position information.

6. The device according to any one of the preceding claims, wherein said processing means (5) are moreover configured to:
- warn the user of a condition of possible reflection and/or request execution of an indirect thermographic measurement of the component (2) if the emissivity value of the component (2) in the state of failure selected by the user is lower than said pre-set emissivity threshold (εT).

7. A method for determining malfunctioning of at least one vehicle component (1) in a vehicle system, comprising the steps of:
- establishing in storage means (6) a plurality of component data associated to corresponding vehicle components (2) ;
- establishing in storage means (6), for each component datum, one or more failure states of the vehicle component (2);
- establishing in storage means (6), for each failure state of said component (2), a reference thermographic map associated to a condition of proper operation of the vehicle component (2), and a pre-set emissivity value indicating the emissivity of the component (2) in the failure state;
- receiving, through interface means (7), a user selection comprising a vehicle component (2) to be diagnosed, and a possible failure state of the vehicle component (2) itself;
- measuring the intensity of the infrared radiation emitted by the component (2);
- determining a sample thermographic map of the component (2) based on the intensity of the infrared radiation measured and as a function of a first calibration parameter indicating the emissivity and a second calibration parameter indicating the reflected temperature;
- comparing the sample thermographic map determined by the thermographic means (4) with the reference thermographic map associated to said component (2); and
- diagnosing the presence or the absence of the failure state of said component (2) selected by the user according to the comparison between the thermographic maps;
said method being **characterized in** implementing, prior to determination of said sample thermographic map, the following steps:
- determining through said storage means (6) the emissivity value associated to the failure state of the component (2) selected by the user; and
- automatically assigning said emissivity value to said first calibration parameter of said thermographic means (4).

8. The method according to Claim 7, wherein, prior to determination of said sample thermographic map, the following operations are carried out:
- determining a test thermographic map of the component (2) based on the intensity of the infrared radiation measured on the component (2);
- determining a temperature value (TAM) on the basis of the acquired temperatures (TA) present in said test thermographic map determined;
- comparing the emissivity value associated to the component (2) and to the failure state selected by the user with a pre-set emissivity threshold (εT) ; and
- automatically assigning said temperature value (TAM) to said second calibration parameter of said thermographic means (4) if the emissivity value of the component (2) in the failure state selected by the user is higher than said pre-set emissivity threshold (εT).

9. The method according to Claim 7 or Claim 8, comprising the steps of:
- establishing, in said storage means (6), a correct-acquisition temperature range (ΔTAM) for each failure state of a component (2); and prior to determining said sample thermographic map of the component (2), said method comprising the steps of:
- automatically assigning a unit value to the calibration parameter of emissivity of said thermographic means (4);
- determining said test thermographic map of the component (2) ;
- determining said temperature value (TAM) as a function of the acquired temperatures (TA) contained in said test thermographic map; and
- warning the operator of a condition of incorrect positioning of said thermographic means (4) in the direction of said component (2) when said temperature value (TAM) is not comprised in the correct-acquisition range (ΔTAM) associated to the state of failure of said component (2).

10. The method according to any one of Claims 7 to 9, comprising the steps of:
- establishing in said storage means (6), for each failure state of a component (2), a graphic representation of at least one portion of the system containing said component (2); said graphic representation containing a window for locating the component and one or more windows for locating disturbance heat sources set around said component (2);
- determining in said storage means (6) the graphic representation of the system containing the window for locating the component and one or more windows for locating disturbance heat sources set around said component (2) as a function of the component (2) and of the failure state selected by the user; and
- displaying, through said interface means (7) said graphic representation of the system, visible/highlighted in which are said window for locating the component and/or said windows for locating disturbance heat sources.

11. The method according to any one of Claims 7 to 10, comprising the steps of:
- establishing in said storage means (6), for each failure state of a component (2), a set of information of position indicating the correct positioning in which to keep the thermographic means (4) in space so as to carry out an acquisition of the thermographic map of the component (2) in the condition of minimum disturbance by disturbance heat sources present in the area of said component;
- determining in said storage means (6) the information of position as a function of the component (2) and of the failure state selected by the user; and
- displaying, through said interface means (7), information of position.

12. The method according to any one of Claims 7 to 11, comprising the steps of:
- warning the user of a condition of possible reflection and/or requesting execution of an indirect thermographic measurement of the component (2) if the emissivity value of the component (2) in the state of failure selected by the user is lower than said pre-set emissivity threshold.

13. The method according to Claim 12, wherein said indirect thermographic measurement of the component (2) comprises the steps of:
- applying an adhesive tape of a specific material with pre-set emissivity on the part of the component (2) selected by the user;
- automatically assigning said temperature value (TAM) to said second calibration parameter of said thermographic means;
- measuring the intensity of the infrared radiation emitted by the component (2); and
- determining the sample thermographic map of the component (2).

14. A software program that can be loaded into the memory (6) of a processing unit (5) and is configured in such a way that, when it is run on the processing unit (5), the latter becomes configured to operate according to any one of Claims 7 to 13.

15. A thermographic video camera (4) configured to implement a software program according to Claim 14 to determine a state of failure of a vehicle component based on processing of the thermographic map of the component (2) itself.

## Patentansprüche

1. vorrichtung, die aufgebaut ist, um die Fehlfunktion wenigstens eines Fahrzeugbauteils (1) in einem Fahrzeugsystem festzustellen, wobei die Vorrichtung umfasst:
- Speichermittel (6), die umfassen
o eine Vielzahl von Bauteildaten, die zu entsprechenden Fahrzeugbauteilen (2) gehören;
o für jedes Bauteildatum einen oder mehrere Fehlerzustände des Fahrzeugbauteils (2);
o für jeden Fehlerzustand des Bauteils (2) ein thermografisches Referenzbild, das zu einem Zustand des einwandfreien Betriebs des Fahrzeugbauteils (2) gehört, und ein vorher festgelegter Emissionswert, der den Emissionsgrad des Bauteils (2) in dem Fehlerzustand anzeigt;
- Schnittstellenmittel (7), die aufgebaut sind, um einen Benutzer in die Lage zu versetzen, ein Fahrzeugbauteil, das geprüft werden soll, und einen möglichen Fehlerzustand des Fahrzeugbauteils (2) selbst, auszuwählen;
- thermografische Mittel (4), die aufgebaut sind, um:
o die Intensität der von dem Bauteil (2) emittierten Infrarotstrahlung zu messen; und
o ein thermographisches Probenbild des Bauteils (2) basierend auf der Intensität der gemessenen Infrarotstrahlung und als eine Funktion eines ersten Eichparameters, der den Emissionsgrad anzeigt, und eines zweiten Eichparameters, der die reflektierte Temperatur anzeigt, zu bestimmen; und
- Verarbeitungsmittel (5), die aufgebaut sind, um:
o das von den thermografischen Mitteln (4) bestimmte thermografische Probenbild mit dem thermografischen Referenzbild, das zu dem Bauteil (2) gehört, zu vergleichen; und
o das Vorhandensein oder Nichtvorhandensein des Fehlerzustands des von dem Benutzer ausgewählten Bauteils (2) als eine Funktion des Vergleichs zwischen den thermografischen Bildern zu prüfen;
wobei die Vorrichtung **dadurch gekennzeichnet ist, dass** die Verarbeitungsmittel (5) überdies aufgebaut sind, um vor der Bestimmung des thermografischen Probenbildes die folgenden Arbeitsgänge auszuführen:
- Bestimmen des in den Speichermitteln (6) enthaltenen Emissionswerts, der zu dem Fehlerzustand des Bauteils (2) gehört, der von dem Benutzer ausgewählt wurde; und
- automatisches Zuweisen des Emissionswerts an den ersten Eichparameter der thermografischen Mittel (4).

2. Vorrichtung nach Anspruch 1, wobei die Verarbeitungsmittel (5) überdies aufgebaut sind, um vor der Bestimmung des thermografischen Probenbildes die folgenden Arbeitsgänge auszuführen:
- Bestimmen eines thermografischen Probenbildes des Bauteils (2) auf der Basis der Intensität der auf dem Bauteil (2) gemessenen Infrarotstrahlung;
- Bestimmen eines Temperaturwerts (TAM) auf der Basis der erfassten Temperaturen (TA), die in dem bestimmten thermografischen Probenbild vorhanden sind;
- Vergleichen des Emissionswerts, der zu dem Bauteil (2) und dem Fehlerzustand, die von dem Benutzer ausgewählt wurden, gehört, mit einem vorher festgelegten Emissionsschwellwert (εT); und
- automatisches Zuweisen des Temperaturwerts (TAM) an den zweiten Eichparameter der thermografischen Mittel (4), wenn der Emissionswert Fehlerzustände des Bauteils (2) in dem Fehlerzustand, der von dem Benutzer ausgewählt wurde, höher als der vorher festgelegte Emissionsschwellwert (εT) ist.

3. Vorrichtung nach Anspruch 2, wobei:
- die Speichermittel (6) einen korrekten Temperaturerfassungsbereich (ΔTAM) für jeden Fehlerzustand eines Bauteils (2) umfassen;
wobei die Verarbeitungsmittel (5) überdies aufgebaut sind, um vor der Bestimmung des thermografischen Probenbildes des Bauteils (2) die folgenden Arbeitsgänge zu implementieren:
- automatisches Zuweisen eines Einheitswerts an den Eichparameter des Emissionsgrads der thermografischen Mittel (4);
- Bestimmen des thermografischen Probenbildes des Bauteils (2);
- Bestimmen des Temperaturwerts (TAM) als eine Funktion der erfassten Temperaturen (TA), die in dem thermografischen Probenbild enthalten sind; und
- Alarmieren des Bedieners über einen inkorrekten Positionierungszustand der thermografischen Mittel (4) in Bezug auf das Bauteil (2), wenn der Temperaturwert (TAM) nicht in dem korrekten Erfassungsbereich (ΔTAM), der zu dem Fehlerzustand des Bauteils (2) gehört, enthalten ist.

4. Vorrichtung nach einem der vorhergehenden Ansprüche, wobei:
- die Speichermittel (6) für jeden Fehlerzustand eines Bauteils (2) eine grafische Darstellung wenigstens eines Abschnitts des Systems, welches das Bauteil (2) enthält, umfassen; wobei die grafische Darstellung ein Fenster zum Lokalisieren des Bauteils und ein oder mehrere Fenster zum Lokalisieren von störenden Wärmequellen, die um das Bauteil (2) eingerichtet sind, enthält;
wobei die Verarbeitungsmittel (5) überdies aufgebaut sind, um:
- in den Speichermitteln (6) die grafische Darstellung des Systems, welches das Fenster zum Lokalisieren des Bauteils und ein oder mehrere Fenster zum Lokalisieren von störenden Wärmequellen, die um das Bauteil (2) eingerichtet sind, enthält, als eine Funktion des Bauteils (2) und des Fehlerzustands, die von dem Benutzer ausgewählt wurden, zu bestimmen;
- durch die Schnittstellenmittel (7) die grafische Darstellung des Systems anzuzeigen, wobei das Fenster zum Lokalisieren des Bauteils und/oder die Fenster zum Lokalisieren von störenden Wärmequellen sichtbar/hervorgehoben sind.

5. Vorrichtung nach einem der vorhergehenden Ansprüche, wobei:
- die Speichermittel (6) für jeden Fehlerzustand eines Bauteils (2) einen Satz von Positionsinformationen umfassen, der die korrekte Positionierung anzeigt, in welcher die thermografischen Mittel (4) im Raum gehalten werden sollen, um eine Erfassung des thermografischen Bildes der Komponente (2) in einem Zustand minimaler Störung durch störende Wärmequellen, die in dem Bereich des Bauteils (2) vorhanden sind, auszuführen,
die Verarbeitungsmittel (5) überdies aufgebaut sind, um:
- im den Speichermitteln (6) die Positionsinformationen als eine Funktion des Bauteils (2) und des Fehlerzustands, die von dem Benutzer ausgewählt wurden, zu bestimmen; und
- die Positionsinformationen durch die Schnittstellenmittel (7) anzuzeigen.

6. Vorrichtung nach einem der vorhergehenden Ansprüche, die Verarbeitungsmittel (5) überdies aufgebaut sind, um:
- den Benutzer über einen Zustand möglicher Reflexion zu alarmieren und/oder die Ausführung einer indirekten thermografischen Messung des Bauteils (2) anzufordern, wenn der Emissionswert des Bauteils (2) in dem von dem Benutzer ausgewählten Fehlerzustand niedriger als der vorder festgelegte Emissionsschwellwert (εT) ist.

7. Verfahren zum Bestimmen der Fehlfunktion wenigstens eines Fahrzeugbauteils (1) in einem Fahrzeugsystem, das die folgenden Schritte umfasst:
- Festlegen einer Vielzahl von Bauteildaten, die zu entsprechenden Fahrzeugbauteilen (2) gehören, in Speichermitteln (6);
- für jedes Bauteildatum Festlegen eines oder mehrerer Fehlerzustände des Fahrzeugbauteils (2) in Speichermiteln (6);
- für jeden Fehlerzustand des Bauteils (2) Festlegen eines thermografischen Referenzbildes, das zu einem Zustand des einwandfreien Betriebs des Fahrzeugbauteils (2) gehört, und eines vorher festgelegten Emissionswerts, der den Emissionsgrad des Bauteils (2) in dem Fehlerzustand anzeigt, in Speichermitteln (6);
- Empfangen einer Benutzerauswahl, welche ein Fahrzeugbauteil (2), das geprüft werden soll, und einen möglichen Fehlerzustand des Fahrzeugbauteils (2) selbst, umfasst, durch Schnittstellenmittel (7);
- Messen der Intensität der von dem Bauteil (2) emittierten Infrarotstrahlung; und
- Bestimmen eines thermographischen Probenbildes des Bauteils (2) basierend auf der Intensität der gemessenen Infrarotstrahlung und als eine Funktion eines ersten Eichparameters, der den Emissionsgrad anzeigt, und eines zweiten Eichparameters, der die reflektierte Temperatur anzeigt; und
- Vergleichen des von den thermografischen Mitteln (4) bestimmten thermografische Probenbildes mit dem thermografischen Referenzbild, das zu dem Bauteil (2) gehört; und
- Prüfen des Vorhandenseins oder Nichtvorhandenseins des Fehlerzustand des von dem Benutzer ausgewählten Bauteils (2) gemäß einem Vergleich zwischen den thermografischen Bildern,
wobei das Verfahren **dadurch gekennzeichnet ist, dass** es vor der Bestimmung des thermografischen Probenbildes die folgenden Schritte ausführt:
- Bestimmen des Emissionswerts, der zu dem Fehlerzustand des Bauteils (2), der von dem Benutzer ausgewählt wurde, gehört, durch die Speichermittel (6); und
- automatische Zuweisen des Emissionswerts an den ersten Eichparameter der thermografischen Mittel (4).

8. Verfahren nach Anspruch 7, wobei vor der Bestimmung des thermografischen Probenbildes die folgenden Arbeitsgänge ausgeführt werden:
- Bestimmen eines thermografischen Probenbildes des Bauteils (2) auf der Basis der Intensität der auf dem Bauteil (2) gemessenen Infrarotstrahlung ;
- Bestimmen eines Temperaturwerts (TAM) auf der Basis der erfassten Temperaturen (TA), die in dem bestimmten thermografischen Probenbild vorhanden sind;
- Vergleichen des Emissionswerts, der zu dem Bauteil (2) und dem Fehlerzustand, die von dem Benutzer ausgewählt wurden, gehört, mit einem vorher festgelegten Emissionsschweilwert (εT), und
- automatisches Zuweisen des Temperaturwerts (TAM) an den zweiten Eichparameter der thermografischen Mittel (4), wenn der Emissionswert des Bauteils (2) in dem Fehlerzustand, der von dem Benutzer ausgewählt wurde, höher als der vorher festgelegte Emissionsschwellwert (εT) ist.

9. Verfahren nach Anspruch 7 oder Anspruch 8, das die folgenden Schritte umfasst:
- Festlegen eines korrekten Temperaturerfassungsbereichs (ΔTAM) für jeden Fehlerzustand eines Bauteils (2) in den SpeichermitteIn (6); und wobei das Verfahren vor dem Bestimmen des thermografischen Probenbildes des Bauteils (2) die folgenden Schritte umfasst:
- automatisches Zuweisen eines Einheitswerts an den Eichparameter des Emissionsgrads der thermografischen Mittel (4);
- Bestimmen des thermografischen Probenbildes des Bauteils (2);
- Bestimmen des Temperaturwerts (TAM) als eine Funktion der erfassten Temperaturen (TA), die in dem thermografischen Proebenbild enthalten sind; und
- Alarmieren des Bedieners über einen inkorrekten Positionierungszustand der thermografischen Mittel (4) in Bezug auf das Bauteil (2), wenn der Temperaturwert (TAM) nicht in dem korrekten Erfassungsbereich (ΔTAM), der zu dem Fehlerzustand des Bauteils (2) gehört, enthalten ist.

10. Verfahren nach einem der ansprüche 7 bis 9, das die folgenden Schritte umfasst:
- für jeden Fehlerzustand eines Bauteils (2) Festlegen einer grafischen Darstellung wenigstens eines Abschnitts des Systems, welches das Bauteil (2) enthält, in den Speichermitteln (6); wobei die grafische Darstellung ein Fenster zum Lokalisieren des Bauteils und ein oder mehrere Fenster zum Lokalisieren von störenden Wärmequellen, die um das Bauteil (2) eingerichtet sind, enthält;
- Bestimmen der grafischen Darstellung des Systems, welches das Fenster zum Lokalisieren des Bauteils und ein oder mehrere Fenster zum Lokalisieren von störenden Wärmequellen, die um das Bauteil (2) eingerichtet sind, enthält, als eine Funktion des Bauteils (2) und des Fehlerzustands, die von dem Benutzer ausgewählt wurden, in den Speichermitteln (6); und
- Anzeigen der grafischen Darstellung des Systems durch die Schniflstellenmitel (7), wobei das Fenster zum Lokalisieren des Bauteils und/oder die Fenster zum Lokalisieren von störenden Wärmequellen sichtbar/hervorgehoben sind.

11. Verfahren nach einem der Ansprüche 7 bis 10, das die folgenden Schritte umfasst:
- Festlegen eines Satzes von Positionsinformationen für jeden Fehlerzustand eines Bauteils (2), der die korrekte Positionierung anzeigt, in welcher die thermografischen Mittel (4) im Raum gehalten werden sollen, in den Speichermitteln (6), um eine Erfassung des thermografischen Bildes der Komponente (2) in einem Zustand minimaler Störung durch störende Wärmequellen, die in dem Bereich des Bauteils (2) vorhanden sind, auszuführen,
- Bestimmen der Positionsinformationen als eine Funktion des Bauteils (2) und des Fehlerzustands, die von dem Benutzer ausgewählt wurden, in den Speichermitteln (6); und
- Anzeigen der Positionsinformationen durch die Schnittstellenmittel (7).

12. Verfahren nach einem der Ansprüche 7 bis 11, das die folgenden Schritte umfasst:
- Alarmieren des Benutzers über einen Zustand möglicher Reflexion und/oder Anfordern der Ausführung einer indirekten thermografischen Messung des Bauteils (2), wenn der Emissionswert des Bauteils (2) in dem von dem Benutzer ausgewählten Fehlerzustand niedriger als der vorher festgelegte Emissionsschwellwert (εT) ist.

13. Verfahren nach Anspruch 12, wobei die indirekte thermografische Messung des Bauteils (2) die folgenden Schritte umfasst:
- Aufbringen eines Klebebands aus einem spezifischen Material mit vorher festgelegtem Emissionsgrad auf dem Teil des Bauteils (2), der von dem Benutzer ausgewählt wurde;
- automatisches Zuweisen des Temperaturwerts (TAM) an den zweiten Eichparameter der thermografischen Mittel;
- Messen der Intensität der von dem Bauteil (2) emittierten Infrarotstrahlung; und
- Bestimmen des thermografischen Probenbildes des Bauteils (2).

14. Softwareprogramm, das in den Speicher (6) einer Verarbeitungseinheit (5) geladen werden kann und das in einer derartigen Weise konfiguriert ist, dass die Letztere konfiguriert wird, um nach einem der Ansprüche 7 bis 13 zu arbeiten.

15. Thermografische Videokamera (4), die konfiguriert ist, um ein Softwareprogramm nach Anspruch 14 zu implementieren, um einen Fehlerzustand eines Fahrzeugbauteils basierend auf der Verarbeitung des thermografischen Bildes des Bauteils (2) selbst zu bestimmen.

## Revendications

1. Dispositif configuré de façon à déterminer le mauvais fonctionnement d'au moins un composant de véhicule (1) dans un système de véhicule, ledit dispositif comprenant :
- des moyens de mémorisation (6) comprenant :
o une pluralité de données de composants associées à des composants de véhicule correspondants (2) ;
o pour chaque donnée de composant, un ou plusieurs états de défaillance du composant de véhicule (2) ;
o pour chaque état de défaillance dudit composant (2), une carte thermographique de référence associée à une condition de fonctionnement correct du composant de véhicule (2), et une valeur de facteur d'émission prédéfinie indiquant le facteur d'émission du composant (2) dans l'état de défaillance ;
- des moyens formant interface (7) configurés de façon à permettre à un utilisateur de sélectionner un composant de véhicule (2) devant être diagnostiqué, et un état de défaillance possible du composant de véhicule (2) lui-même ;
- des moyens thermographiques (4) configurés de façon à :
o mesurer l'intensité du rayonnement infrarouge émis par le composant (2) ; et
o déterminer une carte thermographique d'échantillon du composant (2) en fonction de l'intensité du rayonnement infrarouge mesuré, et en fonction d'un premier paramètre d'étalonnage indiquant le facteur d'émission et d'un deuxième paramètre d'étalonnage indiquant la température réfléchie ; et
- des moyens de traitement (5) configurés de façon à :
o comparer la carte thermographique d'échantillon déterminée par les moyens thermographiques (4) à la carte thermographique de référence associée audit composant (2) ; et
o diagnostiquer la présence ou l'absence de l'état de défaillance dudit composant (2) sélectionné par l'utilisateur en fonction de la comparaison entre les cartes thermographiques ;
ledit dispositif étant **caractérisé en ce que** lesdits moyens de traitement (5) sont de plus configurés de façon à effectuer, avant la détermination de ladite carte thermographique d'échantillon, les opérations suivantes :
- la détermination de la valeur de facteur d'émission contenue dans les moyens de mémorisation (6) associée à l'état de défaillance du composant (2) sélectionné par l'utilisateur ; et
- l'attribution automatique de ladite valeur de facteur d'émission audit premier paramètre d'étalonnage desdits moyens thermographiques (4).

2. Dispositif selon la revendication 1, dans lequel lesdits moyens de traitement (5) sont de plus configurés de façon à effectuer, avant la détermination de ladite carte thermographique d'échantillon, les opérations suivantes :
- la détermination d'une carte thermographique de test du composant (2) en fonction de l'intensité du rayonnement infrarouge mesuré sur le composant (2) ;
- la détermination d'une valeur de température (TAM) en fonction des températures acquises (TA) présentes dans ladite carte thermographique de test déterminée ;
- la comparaison de la valeur de facteur d'émission associée au composant (2), et à l'état de défaillance sélectionné par l'utilisateur, à un seuil de facteur d'émission prédéfini (εT) ; et
- l'attribution automatique de ladite valeur de température (TAM) audit deuxième paramètre d'étalonnage desdits moyens thermographiques (4) si la valeur de facteur d'émission du composant (2) dans l'état de défaillance sélectionné par l'utilisateur est supérieure audit seuil de facteur d'émission prédéfini (εT).

3. Dispositif selon la revendication 2, dans lequel :
- lesdits moyens de mémorisation (6) comprennent une plage de température d'acquisition correcte (ΔTAM) pour chaque état de défaillance d'un composant (2) ;
lesdits moyens de traitement (5) étant de plus configurés de façon à effectuer, avant la détermination de la carte thermographique d'échantillon du composant (2), les opérations suivantes :
- l'attribution automatique d'une valeur unitaire au paramètre d'étalonnage de facteur d'émission desdits moyens thermographiques (4) ;
- la détermination de ladite carte thermographique de test du composant (2) ;
- la détermination de ladite valeur de température (TAM) en fonction des températures acquises (TA) contenues dans ladite carte thermographique de test ; et
- l'avertissement de l'opérateur d'une condition de positionnement incorrect desdits moyens thermographiques (4) vis-à-vis dudit composant (2) lorsque ladite valeur de température (TAM) n'est pas comprise dans la plage d'acquisition correcte (ΔTAM) associée à l'état de défaillance dudit composant (2).

4. Dispositif selon l'une quelconque des revendications précédentes, dans lequel :
- lesdits moyens de mémorisation (6) comprennent, pour chaque état de défaillance d'un composant (2), une représentation graphique d'au moins une partie du système contenant ledit composant (2) ; ladite représentation graphique contenant une fenêtre pour localiser le composant et une ou plusieurs fenêtres pour localiser des sources de chaleur de perturbation disposées autour dudit composant (2) ;
lesdits moyens de traitement (5) étant de plus configurés de façon à :
- déterminer dans lesdits moyens de mémorisation (6) la représentation graphique du système contenant la fenêtre pour localiser le composant et une ou plusieurs fenêtres pour localiser des sources de chaleur de perturbation disposées autour dudit composant (2), en fonction du composant (2) et de l'état de défaillance sélectionné par l'utilisateur ;
- afficher, par l'intermédiaire desdits moyens formant interface (7), ladite représentation graphique du système, visible/accentuée, dans laquelle se trouvent ladite fenêtre pour localiser le composant et/ou lesdites fenêtres pour localiser des sources de chaleur de perturbation.

5. Dispositif selon l'une quelconque des revendications précédentes, dans lequel :
- lesdits moyens de mémorisation (6) comprennent, pour chaque état de défaillance d'un composant (2), un jeu d'information de position indiquant le positionnement correct dans lequel il faut maintenir les moyens thermographiques (4) dans l'espace de façon à effectuer une acquisition de la carte thermographique du composant (2) dans une condition de perturbation minimale par des sources de chaleur de perturbation présentes dans la zone dudit composant (2) ;
lesdits moyens de traitement (5) étant de plus configurés de façon à :
- déterminer dans lesdits moyens de mémorisation (6) l'information de position en fonction du composant (2) et de l'état de défaillance sélectionné par l'utilisateur ; et
- afficher, par l'intermédiaire desdits moyens formant interface (7), ladite information de position.

6. Dispositif selon l'une quelconque des revendications précédentes, dans lequel lesdits moyens de traitement (5) sont de plus configurés de façon à :
- avertir l'utilisateur d'une condition de possible réflexion et/ou exécution de demande d'une mesure thermographique indirecte du composant (2) si la valeur de facteur d'émission du composant (2) dans l'état de défaillance sélectionné par l'utilisateur est inférieure audit seuil de facteur d'émission prédéfini (εT).

7. Procédé pour déterminer un mauvais fonctionnement d'au moins un composant de véhicule (1) dans un système de véhicule, comprenant les étapes consistant à :
- établir dans des moyens de mémorisation (6) une pluralité de données de composants associées à des composants de véhicule correspondants (2) ;
- établir dans des moyens de mémorisation (6), pour chaque donnée de composant, un ou plusieurs état de défaillance du composant de véhicule (2) ;
- établir dans des moyens de mémorisation (6), pour chaque état de défaillance dudit composant (2), une carte thermographique de référence associée à une condition de fonctionnement correct du composant de véhicule (2), et une valeur de facteur d'émission prédéfinie indiquant le facteur d'émission du composant (2) dans l'état de défaillance ;
- recevoir, par l'intermédiaire de moyens formant interface (7), une sélection d'utilisateur comprenant un composant de véhicule (2) devant être diagnostiqué, et un état de défaillance possible du composant de véhicule (2) lui-même;
- mesurer l'intensité du rayonnement infrarouge émis par le composant (2) ;
- déterminer une carte thermographique d'échantillon du composant (2) en fonction de l'intensité du rayonnement infrarouge mesuré, et en fonction d'un premier paramètre d'étalonnage indiquant le facteur d'émission et d'un deuxième paramètre d'étalonnage indiquant la température réfléchie ;
- comparer la carte thermographique d'échantillon déterminée par les moyens thermographiques (4) à la carte thermographique de référence associée audit composant (2) ; et
- diagnostiquer la présence ou l'absence de l'état de défaillance dudit composant (2) sélectionné par l'utilisateur en fonction de la comparaison entre les cartes thermographiques ;
ledit procédé étant **caractérisé par** l'exécution, avant la détermination de ladite carte thermographique d'échantillon, des étapes suivantes, consistant à :
- déterminer par l'intermédiaire desdits moyens de mémorisation (6) la valeur de facteur d'émission associée à l'état de défaillance du composant (2) sélectionné par l'utilisateur ; et
- attribuer automatiquement ladite valeur de facteur d'émission audit premier paramètre d'étalonnage desdits moyens thermographiques (4).

8. Procédé selon la revendication 7, dans lequel, avant la détermination de ladite carte thermographique d'échantillon, les opérations suivantes sont effectuées :
- la détermination d'une carte thermographique de test du composant (2) en fonction de l'intensité du rayonnement infrarouge mesuré sur le composant (2) ;
- la détermination d'une valeur de température (TAM) en fonction des températures acquises (TA) présentes dans ladite carte thermographique de test déterminée ;
- la comparaison de la valeur de facteur d'émission associée au composant (2), et à l'état de défaillance sélectionné par l'utilisateur, à un seuil de facteur d'émission prédéfini (εT) ; et
- l'attribution automatique de ladite valeur de température (TAM) audit deuxième paramètre d'étalonnage desdits moyens thermographiques (4) si la valeur de facteur d'émission du composant (2) dans l'état de défaillance sélectionné par l'utilisateur est supérieure audit seuil de facteur d'émission prédéfini (εT).

9. Procédé selon la revendication 7 ou la revendication 8, comprenant les étapes consistant à :
- établir, dans lesdits moyens de mémorisation (6), une plage de température d'acquisition correcte (ΔTAM) pour chaque état de défaillance d'un composant (2) ; et, avant la détermination de ladite carte thermographique d'échantillon du composant (2), ledit procédé comprenant les étapes consistant à :
- attribuer automatiquement une valeur unitaire au paramètre d'étalonnage de facteur d'émission desdits moyens thermographiques (4) ;
- déterminer ladite carte thermographique de test du composant (2) ;
- déterminer ladite valeur de température (TAM) en fonction des températures acquises (TA) contenues dans ladite carte thermographique de test ; et
- avertir l'opérateur d'une condition de positionnement incorrect desdits moyens thermographiques (4) dans la direction dudit composant (2) lorsque ladite valeur de température (TAM) n'est pas comprise dans la plage d'acquisition correcte (ΔTAM) associée à l'état de défaillance dudit composant (2).

10. Procédé selon l'une quelconque des revendications 7 à 9, comprenant les étapes consistant à :
- établir dans lesdits moyens de mémorisation (6), pour chaque état de défaillance d'un composant (2), une représentation graphique d'au moins une partie du système contenant ledit composant (2) ; ladite représentation graphique contenant une fenêtre pour localiser le composant et une ou plusieurs fenêtres pour localiser des sources de chaleur de perturbation disposées autour dudit composant (2) ;
- déterminer dans lesdits moyens de mémorisation (6) la représentation graphique du système contenant la fenêtre pour localiser le composant et une ou plusieurs fenêtres pour localiser des sources de chaleur de perturbation disposées autour dudit composant (2), en fonction du composant (2) et de l'état de défaillance sélectionné par l'utilisateur ; et
- afficher, par l'intermédiaire desdits moyens formant interface (7), ladite représentation graphique du système, visible/accentuée, dans laquelle se trouvent ladite fenêtre pour localiser le composant et/ou lesdites fenêtres pour localiser des sources de chaleur de perturbation.

11. Procédé selon l'une quelconque des revendications 7 à 10, comprenant les étapes consistant à :
- établir dans lesdits moyens de mémorisation (6), pour chaque état de défaillance d'un composant (2), un jeu d'information de position indiquant le positionnement correct dans lequel il faut maintenir les moyens thermographiques (4) dans l'espace de façon à effectuer une acquisition de la carte thermographique du composant (2) dans une condition de perturbation minimale par des sources de chaleur de perturbation présentes dans la zone dudit composant ;
- déterminer dans lesdits moyens de mémorisation (6) l'information de position en fonction du composant (2) et de l'état de défaillance sélectionné par l'utilisateur ; et
- afficher, par l'intermédiaire desdits moyens formant interface (7), l'information de position.

12. Procédé selon l'une quelconque des revendications 7 à 11, comprenant les étapes consistant à :
- avertir l'utilisateur d'une condition de possible réflexion et/ou exécution de demande d'une mesure thermographique indirecte du composant (2) si la valeur de facteur d'émission du composant (2) dans l'état de défaillance sélectionné par l'utilisateur est inférieure audit seuil de facteur d'émission prédéfini.

13. Procédé selon la revendication 12, dans lequel ladite mesure thermographique indirecte du composant (2) comprend les étapes consistant à :
- appliquer une bande adhésive en un matériau spécifique avec un facteur d'émission prédéfini sur la partie du composant (2) sélectionnée par l'utilisateur ;
- attribuer automatiquement ladite valeur de température (TAM) audit deuxième paramètre d'étalonnage desdits moyens thermographiques :
- mesurer l'intensité du rayonnement infrarouge émis par le composant (2) ; et
- déterminer la carte thermographique d'échantillon du composant (2).

14. Programme de logiciel qui peut être chargé dans la mémoire (6) d'une unité de traitement (5) et qui est configuré de telle sorte que, lorsqu'il est exécuté sur l'unité de traitement (5), cette dernière devient configurée de façon à fonctionner selon l'une quelconque des revendications 7 à 13.

15. Caméra vidéo thermographique (4) configurée de façon à mettre en oeuvre un programme de logiciel selon la revendication 14 de façon à déterminer un état de défaillance d'un composant de véhicule en fonction d'un traitement de la carte thermographique du composant (2) lui-même.
